# EUROPEAN PATENT APPLICATION

(11) **EP 4 813 817 A1**
(43) Date of publication of application: **30.09.2026**
(21) Application number: 26167662.1
(22) Date of filing: 25.03.2026
(51) Int. Cl.: B62D 35/00

(54) **FRONT BUMPER FOR A MOTOR VEHICLE**

(30) Priority: 27.03.2025 IT 202500006399
(71) Applicant: FERRARI S.p.A., 41100 Modena (IT)
(72) Inventor: SEDDA, Salvatore, 41100 MODENA (IT); BAGNARDI, Giuseppe, 41100 MODENA (IT); MANZONI, Flavio, 41100 MODENA (IT); PALAZZANI, Carlo, 41100 MODENA (IT)
(74) Representative: Studio Torta S.p.A.

(57) **Abstract**

Front bumper (3) comprises a lateral end (5) provided with a through duct (6) extending longitudinally along a curvilinear axis (K) with a closed cross-section with respect to the curvilinear axis (K) and defined between an inlet opening (7) facing towards a front of the front bumper (3), and an outlet opening (8) facing towards an outer side of the front bumper (3).

## Description

### CROSS-REFERENCE TO RELATED APPLICATIONS

This patent application claims priority from Italian patent application no. 102025000006399 filed on March 27, 2025, the entire disclosure of which is incorporated herein by reference.

### FIELD OF THE ART

The invention relates generally to the field of motor vehicles and more in particular to a front bumper.

### PRIOR ART

As is well known, the front bumper of a motor vehicle defines the front end of the vehicle and is therefore the first element exposed to the aerodynamic flow generated as the vehicle moves forward.

Thus, the conformation of the front bumper is decisive in defining the aerodynamic performance of the vehicle, as well as the course of aerodynamic flows to the sides and rear of the vehicle.

Therefore, there is a general need to improve the conformation of the front bumper, particularly with a view to improving the aerodynamic behaviour of the vehicle by influencing the aerodynamic flow pattern around it, more particularly by maximizing an "out-wash" effect, possibly also contributing to generating downforce.

An aim of the invention is to meet the need set out above, preferably in a simple and reliable manner.

### DISCLOSURE OF THE INVENTION

The aim is achieved by a bumper as defined in claim 1.

The dependent claims define particular embodiments of the invention.

### BRIEF DESCRIPTION OF THE DRAWINGS

In the following, an embodiment of the invention is described for a better understanding thereof by way of non-limiting example and with reference to the accompanying drawings in which:
- Figure 1 is a perspective view of a motor vehicle comprising a bumper according to the invention,

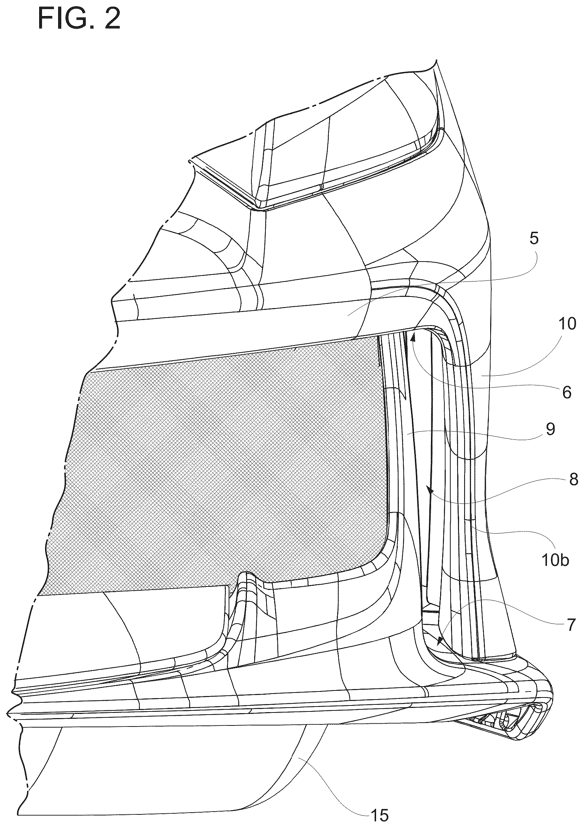

- Figure 2 is a perspective view from the front of a front portion of the vehicle, at a lateral end of the bumper,

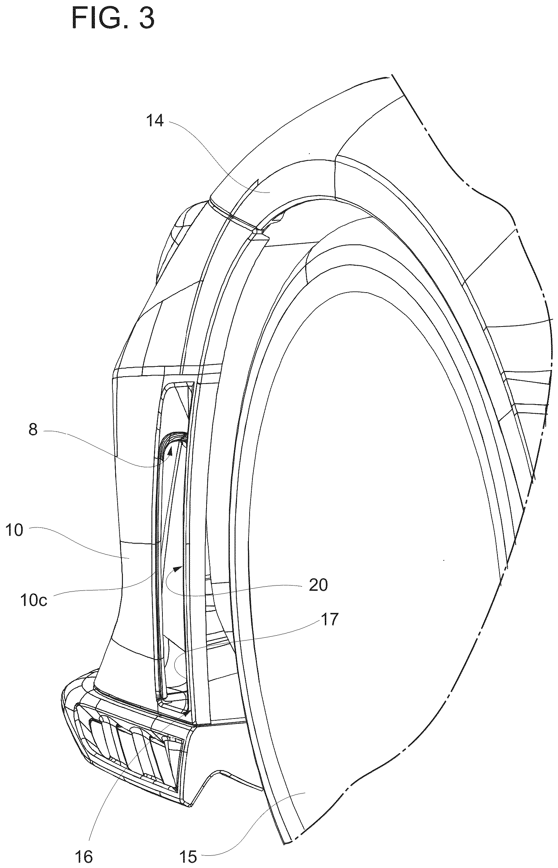

- Figure 3 is a perspective view from the back of the rear portion of Figure 2,
- Figure 4 is a cross-section of the front portion in Figures 2, 3, according to a cross-section plane orthogonal to a yaw axis of the vehicle, and

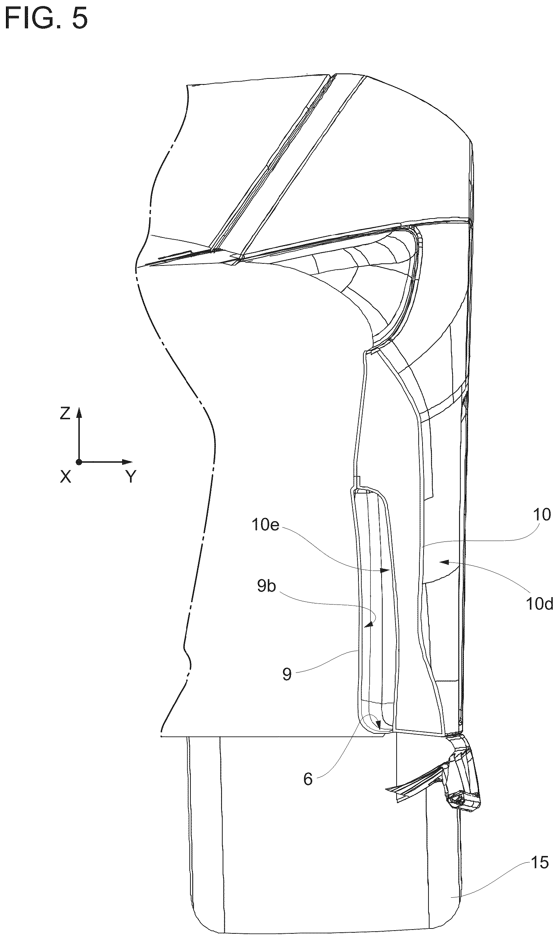

- Figure 5 is a cross-section of the front portion of Figures 2, 3 according to a cross-section plane orthogonal to a roll axis of the vehicle.

### EMBODIMENTS OF THE INVENTION

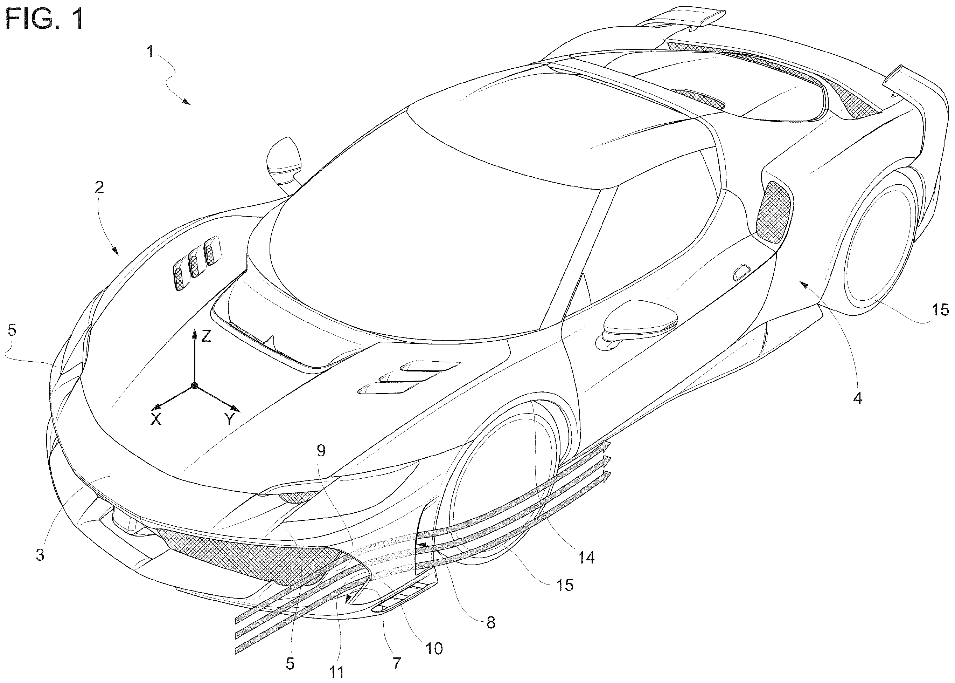

In Figure 1, the reference numeral 1 is used to denote, as a whole, a motor vehicle.

The motor vehicle 1 comprises a front portion 2, according to a normal direction of travel of the motor vehicle 1 itself.

The motor vehicle 1 has a roll axis X that is longitudinal, i.e. parallel to or coincident with the direction of travel.

The motor vehicle 1 also has a pitch axis Y, which is orthogonal to the roll axis X and horizontal, so that it extends laterally, i.e. from one side or lateral wall 4 (for example, in a non-limiting manner, lateral wall 4 meaning a side of the motor vehicle 1 or a side panel of the motor vehicle 1, each possibly outer) to the other of the motor vehicle 1, orthogonally to the roll axis X.

The motor vehicle 1 also has a yaw axis Z, which is orthogonal to the axes X, Y and therefore has at least one vertical component, i.e. oriented like the direction of the acceleration of gravity.

The front portion 2 comprises a front bumper 3, which in greater detail defines a front end of the motor vehicle 1, according to the roll axis X. In other words, the front portion 2 terminates at the front with the front bumper 3, which is the first component exposed or subject to an aerodynamic flow generated along the roll axis X during a forward movement of the motor vehicle 1.

The front bumper 3 comprises two lateral ends 5 (according to the pitch axis Y), which define the laterally outermost front corners of the motor vehicle 1 and therefore form corners with the lateral walls 4.

The lateral ends 5 are preferably symmetrical to each other with respect to a vertical centerline plane of the motor vehicle 1 (plane of axes X, Z), therefore this description will only refer to one of them, it being understood that the relevant characteristics are also applicable to the other of the lateral ends 5.

Since both the front portion 2 and front bumper 3 are part of the motor vehicle 1, each of the axes X, Y, Z can also be a reference for the front portion 2 and front bumper 3, even when these are dismantled, since they are in any case intended to be mounted on the motor vehicle 1 in a suitable orientation with respect to the axes X, Y, Z.

Therefore, both the front portion 2 and front bumper 3 may even have their own roll, pitch, and yaw axes, always indicated by the symbols X, Y, Z, which will be parallel to the axes X, Y, Z of the motor vehicle 1 when the front portion 2 and front bumper 3, respectively, are mounted on the motor vehicle 1.

In general, the axes X, Y, Z can be applied to any point, for example but not necessarily the centre of gravity, of the relevant component whose reference axes they constitute.

The lateral end 5 comprises, has or is provided with a through duct 6 extending longitudinally or axially along a curvilinear axis K between an inlet opening 7 and an outlet opening 8.

The inlet opening 7 is to the front of the outlet opening 8.

The axis K initially extends from the inlet opening 7 with at least one longitudinal component (along the axis X) towards a rear of the bumper 3 and traces a curve towards an outer side of the bumper 3 or the motor vehicle 1 (according to the axis Y) until it terminates at the outlet opening 8, still pointing in particular towards the outer side of the bumper 3. In particular, at the inlet opening 7, the axis K points towards a front of the motor vehicle 1 or the bumper 3.

For the sake of clarity, here and going forward, expressions such as front, rear, at the front, at the rear, back, in front, and the like refer to the roll axis X, directed in the normal direction of travel of the motor vehicle 1.

Similarly, expressions such as inner side and outer side are referred to in relation to the vertical centerline plane of either the motor vehicle 1 or the bumper 3, in the latter case according to the orientation in which it is mounted on the motor vehicle 1.

The cross-sections of the duct 6, i.e. the sections in planes orthogonal to the axis K for each of its points, are closed cross-sections, i.e. sections whose area is delimited by respective contours with a closed profile, for example substantially quadrangular or with irregular shapes, preferably sinuous, i.e. with curved or arched segments or edges.

The cross-sections of the duct 6 at the ends of the axis K are defined by the inlet opening 7 and outlet opening 8, respectively.

The inlet opening 7 faces or is directed towards the front of the bumper 3 or the motor vehicle 1. More precisely, the axis K at the inlet opening 7 points towards the front of the bumper 3 or the motor vehicle 1. In other words, the inlet opening 7 is located in an area of the bumper 3 that extends substantially transverse or crosswise to the axis X or the plane of the axes X, Z.

More in particular, the inlet opening 7 also faces or is directed towards a centre or inner side of the bumper 3 or the motor vehicle 1 (according to the pitch axis Y), i.e. towards the vertical centerline plane. More precisely, the axis K at the inlet opening 7 points towards the centre or inner side of the bumper 3 or the motor vehicle 1. In other words, the axis K is oblique at the inlet opening 7; going from the rear towards the front of the bumper 3 or the motor vehicle 1, the axis K at the inlet opening 7 is inclined towards the centre or inner side of the bumper 3 at a (conveniently acute) angle with respect to an axis parallel to the axis X at the point on the axis K corresponding to the inlet opening 7. Still, in other words, more precisely, with respect to a first and a second axis at a point on the axis K at the inlet opening 7, the first and second axes being respectively parallel to the axes X, Y, the axis K has a first component along the first axis and a second component along the second axis directed towards the centre or inner side of the bumper 3 or the motor vehicle 1.

Alternatively or additionally, the outlet opening 8 faces or is directed towards an outer side of the bumper 3 or the motor vehicle 1 (according to the pitch axis Y), i.e. the outer space laterally beyond the lateral wall 4. More precisely, the axis K at the outlet opening 8 points towards the outer side of the bumper 3 or the motor vehicle 1. In other words, the outlet opening 8 is located in an area of the bumper 3 that extends substantially transverse or crosswise to the axis Y or the plane of the axes Y, Z. In particular, the outlet opening 8 is in line or flush with the lateral wall 4, according to the axis X.

More in particular, the outlet opening 8 also faces or is directed towards a rear of the bumper 3 or the motor vehicle 1. More precisely, the axis K at the outlet opening 8 points towards the rear of the bumper 3 or the motor vehicle 1. In other words, the axis K is oblique at the outlet opening 8; going from the front towards the rear of the bumper 3 or the motor vehicle 1, the axis K at the outlet opening 8 is inclined towards the rear of the bumper 3 at a (conveniently acute) angle with respect to an axis parallel to the axis Y at the point on the axis K corresponding to the outlet opening 8. Still, in other words, more precisely, with respect to a first and a second axis at a point on the axis K at the inlet opening 7, the first and second axes being respectively parallel to the axes X, Y, the axis K has a first component along the first axis and a second component along the second axis directed towards the centre or inner side of the bumper 3 or the motor vehicle 1. Still, in other words, more precisely, with respect to a third and fourth axis at a point on the axis K at the outlet opening 8, the third and fourth axes being parallel to the axes X, Y respectively, the axis K has a third component along the third axis and a fourth component along the fourth axis directed towards the outer side of the bumper 3 or the motor vehicle 1.

Preferably, the axis K extends from the inlet opening 7 towards the outlet opening 8 or more in particular to the outlet opening 8 with an inflection F between a foremost segment K1 and a rearmost segment K2. In particular, the inflection F is an extreme for both segments K1 and K2; moreover, for example, the ends of the segments K1, K2 opposite the inflection F are located at the inlet opening 7 and outlet opening 8, respectively.

In particular, the segment K1 has a concavity directed towards the inner side of the bumper 3 or the motor vehicle 1, while the segment K2 has a concavity directed towards the outer side of the bumper 3 or the motor vehicle 1, according to the pitch axis Y. In more detail, the concavities of the segments K1, K2 are directed according to respective axes oblique to the axis Y and extending from the centre (vertical centerline plane) or inner side of the bumper 3 or the motor vehicle 1 simultaneously towards the front and outer side of the bumper 3 or the motor vehicle 1.

The duct 6 is laterally defined or delimited by a wall 9 and a further wall or profiled wall or appendage 10 of the lateral end 5; the walls 9, 10 are respectively the innermost and outermost walls according to the axis Y. In other words, the axis K extends between the walls 9, 10, according to the axis Y.

In a cross-section of the duct 6 (by means of a sectional plane orthogonal to the axis K at a point thereof), the wall or appendage 10 has a generally arched shape or course with an intermediate part extending substantially (i.e., predominantly) from top to bottom or vice versa, i.e., vertically (i.e, according to the axis Z) and two fillet arcs, defining the upper and lower ends of the wall 10 with the intermediate part therebetween, the upper and lower ends connecting respectively to an upper and lower zone of the wall 9, thus closing the cross-section of the duct 6.

Here and in the following, for the sake of clarity, expressions such as low, high, above, below, up, down, and the like, refer to the yaw axis Z and more in particular to the direction of the acceleration of gravity.

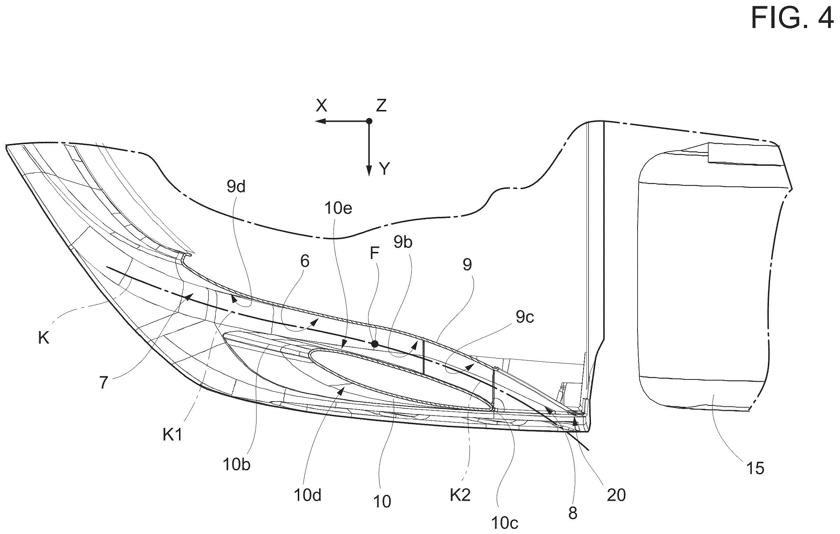

In detail, the curved shape or course of the wall or appendage 10 mentioned above is concave towards the wall 9.By sectioning the wall 10 with a horizontal plane (Figure 4), i.e. parallel to the plane of the axes X, Y, the wall 10 presents a profile or closed contour with a leading edge 10b, foremost, and a trailing edge 10c, rearmost.

Respectively and independently of each other, the leading edge 10b and the trailing edge 10c define the respective edges of the inlet opening 7 and the outlet opening 8.

The closed profile, according to (or, in a non-limiting manner, on) the section with the above-mentioned horizontal plane (hereinafter referred to more simply as horizontal section), i.e. the wall 10 has in particular, on one side, a convex surface 10d (for example, in a non-limiting manner, according to or on the horizontal section) towards the outer side of the motor vehicle 1 (or more generally laterally outermost for the wall 10 according to the axis Y) and, on the other, opposite side according to the axis Y, a convex surface 10e (for example, in a non-limiting manner, according to or on the horizontal section) towards the wall 9 (or more generally laterally innermost for the wall 10 according to the axis Y).

According to a possible non-limiting aspect, in the present description, the horizontal section is a section of the bumper 3 in a horizontal plane (for example as in Figure 4), i.e. parallel to the plane of the axes X, Y or orthogonal to the axis Z.

The surface 10d defines for the bumper 3 an outer lateral end face, which is directly exposed on the outer side of the bumper. In practice, the surface 10d defines the outermost lateral surface of the bumper 3.

According to (or, in a non-limiting manner, on) the horizontal section, the surface 10d (or, in a non-limiting manner, its profile on the horizontal section) is concave towards the inner side of the bumper 3 or the motor vehicle 1, i.e., it has concavity directed towards the same inner side or the vertical centerline plane. The concavity of the suction surface 10d (or, in a non-limiting manner, of its profile on the horizontal section) is directed more in particular according to one of the oblique axes mentioned above (the one associated with the segment K2), independently of the segment K2, the presence of which is not in itself necessary for the definition of the oblique axis.

Again, according to (or, in a non-limiting manner, on) the horizontal section, the surface 10e (or, in a non-limiting manner, its profile on the horizontal section) is concave towards the outer side of the bumper 3 or the motor vehicle 1, i.e., it has concavity directed towards the same outer side. The concavity of the surface 10e (or, in a non-limiting manner, of its profile on the horizontal section) is still directed, again independently of what has been described so far, according to one of the above-mentioned oblique axes (the one associated with the segment K2).

Preferably, the wall 10 has at the front (in particular on the leading edge 10b) a recess 11 in the longitudinal direction (along the chord of the closed profile of wall 10, i.e. the straight segment connecting the edges 10b, 10c on the horizontal section), more in particular in a wedge or V-shape.

In practice, thanks to the closed cross-section of the duct 6 and in particular also the conformation of the walls 9, 10, the duct 6, especially in the segment K1, as will become clear below, defines a compression zone inside the duct 6, to which the generation of a downward load acting on a lower surface or base of the duct 6 (between the walls 9, 10) corresponds.

The walls 9, 10 have respective surfaces defining or delimiting the duct 6 laterally therebetween.

According to a possible non-limiting aspect, the respective surfaces of the walls 9, 10 are fixed surfaces of the bumper 3.

The surface of the wall 9 (the one laterally delimiting the duct 6), indicated herein by the symbol 9b, is an innermost lateral surface for the duct 6.

The surface of the wall 10 (the one laterally delimiting the duct 6), defined herein specifically (but not necessarily, in general) by the surface 10e, is a outermost lateral surface for the duct 6.

The surface 9b has (for example, in a non-limiting manner, according to the or on the horizontal section, as visible in Figure 4) at least one concave portion 9c, which specifically laterally defines the duct 6 at the segment K2. The concave portion 9c (or, in a non-limiting manner, its profile on the horizontal section) has a concavity (for example, in a non-limiting manner, according to the or on the horizontal section, as visible in Figure 4) directed towards the outer side of the bumper 3 or the motor vehicle 1, according to the axis Y, the concavity being more particularly directed according to one of the above-mentioned oblique axes (the same one associated with the segment K2).

Therefore, the concavity of the concave portion 9c (or, in a non-limiting manner, of its profile on the horizontal section) is also directed towards the front of the bumper 3 or the motor vehicle 1.

The surface 9b has (for example, in a non-limiting manner, according to the or on the horizontal section, as visible in Figure 4) in particular also a convex portion 9d, which specifically laterally defines the duct 6 at the segment K1; the curvature of the convex portion 9d (or, in a non-limiting manner, of its profile on the horizontal section) is directed in the opposite way to that of the concave portion 9c. As will become clearer below, a further convex portion could be constructed in continuity with the concave portion 9c and downstream thereof at the outlet opening 8.

The concave portion 9c faces at least one further concave portion of the laterally outermost surface for the duct 6, defined here specifically by the surface 10e. For example, the further concave portion is the entire pressure surface 10e. In general, the concavity (for example, in a non-limiting manner, according to the or on the horizontal section) of the further concave portion (or, in a non-limiting manner, of its profile on the horizontal section) is directed towards the outer side of the bumper 3 or the motor vehicle 1, or more particularly according to one of the aforementioned oblique axes (the same as that associated with the segment K2).

Preferably, but not necessarily, the duct 6 extends from the inlet opening 7 towards the outlet opening 8 or more precisely to the outlet opening 8 with a convergent-divergent configuration, in particular convergent along the segment K1 and divergent along the segment K2.

The convergent-divergent configuration is not *per se* necessary, hence the duct 6 could have a configuration that is only convergent or at least convergent along a first segment, for example starting from or at the inlet opening 7 (in particular the segment K1), as well as optionally having a constant cross-section or an only divergent configuration, without loss of generality.

The convergent part of the duct 6 conveniently favours the formation of the compression zone mentioned above.

The front portion 2, in addition to the bumper 3, also comprises a front part of the lateral walls 4 and/or in particular a wheelhouse arch or more simply a wheel arch 14, or also a fender, more in particular forming part of the lateral wall 4.

The wheel arch 14 or fender defines an underlying wheel well to accommodate a wheel 15 of the motor vehicle 1.

Here, the wheel arch 14 or the fender is understood as an element having an outer lateral surface, in particular with an arc shape around the axis Y, i.e. a lateral surface of the motor vehicle 1 or of the lateral wall 4 exposed and/or facing, in particular directly, towards the outer side of the bumper 3 or of the motor vehicle 1, according to the axis Y. The wheel arch 14 or fender could also be understood as being defined by or consisting of the outer lateral surface just mentioned.

The bumper 3 has an edge surface 16 arranged flush or aligned with the wheel arch 14 or the fender (i.e., with the outer lateral surface thereof) and defining a rearmost edge 17 of the outlet opening 8. A foremost edge of the outlet opening 8 is defined instead by the trailing edge 10c of the wing 10. Preferably, the edges 17, 10c are aligned with each other along a direction parallel to the axis X. In particular, for example like the wheel arch 14 or the fender, the edge surface 16 is laterally external for the lateral wall 4 or the motor vehicle 1, i.e. it is exposed and/or facing, in particular directly, towards the outer side of the bumper 3 or the motor vehicle 1, according to the axis Y.

In other words, in general, the outlet opening 8 is in fact a "hole" on the lateral end 5 arranged transversely or more precisely orthogonally with respect to the axis Y. On the other hand, independently, the inlet opening 7 is in fact a "hole" on a front wall of the bumper 3 or the lateral end 5 arranged transversely (optionally orthogonally) with respect to the axis X.

The bumper 3 preferably comprises a fillet surface 20 defining a fillet between the concave portion 9c and the edge surface 16. In turn, the fillet forms an inflection (for example, in a non-limiting manner, on the horizontal section, as visible in Figure 4) between the concave portion 9c and the edge surface 16. In fact, in particular, the edge surface 16 is substantially orthogonal with respect to the axis Y, while the concave portion 9c (or, in a non-limiting manner, its profile on the horizontal section) has a concavity directed towards the front and/or the outer side of the bumper 3. The fillet surface 20 is preferably convex (for example, in a non-limiting manner, according to the or on the horizontal section, as visible in Figure 4) towards the outer side of the motor vehicle 1.

The surface 10d is preferably configured to guide on the lateral wall 4 or wheel arch 14 or fender (i.e., to keep it attached to the lateral wall 4 or wheel arch 14), a portion of the airflow impinging on the leading edge 10b from the front. Preferably, the other part of the aerodynamic flow, which is introduced into the duct 6, is guided onto the lateral wall 4 or wheel arch 14 or fender via the fillet surface 20 and the edge surface 16.

From the foregoing, the advantages of the bumper 3 or the motor vehicle 1 according to the invention are clear.

The duct 6, particularly shaped by the concave portion 9c and the closed profile of the wall 10, creates a compression zone that results in increased aerodynamic load on the motor vehicle 1.

In addition, the surface 10d, together with the duct 6 keep the aerodynamic flow adherent to the lateral wall 4 and the wheel arch 14, so that the aerodynamic efficiency of the motor vehicle 1 increases.

Finally, it is clear that modifications and variants can be made to the bumper 3 or motor vehicle 1 according to the invention which, however, do not fall outside the scope of protection defined by the claims.

In particular, the number and shape of each of the components described and illustrated could be different.

The various components can be more internal or more external, according to the axis Y, based on the reference taken into consideration.

Furthermore, the various examples described can be combined with each other without any limitations, with particular reference to the various features individually described in the various paragraphs of the description. Each of these characteristics is independently applicable to each of the embodiments of the invention.

## Claims

1. Front bumper (3) for a motor vehicle (1), the bumper comprising a lateral end (5) provided with a through duct (6) extending longitudinally along a curvilinear axis (K) with a closed cross-section with respect to the curvilinear axis (K) and defined between
- an inlet opening (7) facing towards a front of the front bumper (3), and
- an outlet opening (8) facing towards an outer side of the front bumper (3).

2. The front bumper according to claim 1, wherein
- the inlet opening (7) is also facing towards a centre of the front bumper (3), and/or
- the outlet opening (8) is also facing towards a rear of the front bumper (3).

3. The front bumper according to claim 1 or 2, wherein the curvilinear axis (K) extends from the inlet opening (7) towards the outlet opening (8) with a first inflection (F) between a foremost first segment (K1) and a rearmost second segment (K2), the first and second segments (K1, K2) having respective concavities directed towards an inner side and an outer side of the front bumper (3), according to a pitch axis (Y) of the motor vehicle.

4. The front bumper according to any of the preceding claims, wherein the through duct (6) is laterally defined between an innermost lateral surface (9) and an outermost lateral surface (10e), the innermost lateral surface (9) having at least a first concave portion (9c) with concavity directed towards an outer side of the bumper (3), according to a pitch axis (Y) of the motor vehicle.

5. The bumper according to claim 4, wherein the concavity of the first concave portion (9c) is also directed towards the front of the bumper (3).

6. The front bumper according to claim 4 or 5, further comprising a profiled wall (10) defining on one side said outermost lateral surface (10e) and on the other side, opposite according to the pitch axis (Y), an outer lateral end face (10d) directly exposed on the outer side of the bumper (3).

7. The front bumper according to claim 6, wherein the first concave portion (9c) faces a second concave portion (10e) of said outermost lateral surface (10e) with concavity directed towards the outer side of the bumper (3).

8. The front bumper according to claim 7, wherein the outer lateral end face (10d) is concave towards the inner side of the bumper (3).

9. The front bumper according to any of the preceding claims, wherein the through duct (6) extends from the inlet opening (7) towards the outlet opening (8) with at least one segment with a convergent or convergent-divergent configuration, in particular convergent along a foremost first segment (K1) of the curvilinear axis (K) and divergent along a rearmost second segment (K2) of the curvilinear axis (K), more particularly wherein the curvilinear axis has a first inflection (F) between the first segment and the second segment (K1, K2), the first and second segments (K1, K2) having respective concavities directed towards an inner side and an outer side of the front bumper (3), according to a pitch axis (Y) of the motor vehicle.

10. Motor vehicle front portion (2) comprising
- a wheel arch (14) defining an underlying wheel well to accommodate a wheel of the motor vehicle, and
- a front bumper (3) according to any of claims 4 to 9, the bumper (3) further comprising an edge surface (16) arranged flush with the wheel arch (14) and defining a rearmost edge (17) of the outlet opening (8),
wherein the bumper (3) further comprises a fillet surface (20) defining a fillet between the first concave portion (9c) and the edge surface (16) with the formation of a second inflection between the first concave portion (9c) and the edge surface (16).

11. Motor vehicle (1) comprising a front bumper (3) according to any one of claims 1 to 9, or a motor vehicle front portion (2) according to claim 10.
